# FASCICULE DE BREVET EUROPEEN

(11) **EP 0 455 566 B1**
(45) Date de publication et mention de la délivrance du brevet: **30.06.1993**
(21) Numéro de dépôt: 91420135.5
(22) Date de dépôt: 24.04.1991
(51) Int. Cl.: F24F 13/12, B60H 1/24

(54) **Diffuseur d'air équipé d'un dispositif de réglage de l'orientation du flux d'air, notamment pour l'équipement de véhicule**
Luftauslass mit Regelung der Luftstromrichtung, insbesondere für Fahrzeugausrüstung
Air outlet with device for controlling the orientation of an air stream, especially for vehicle equipment

(30) Priorité: 24.04.1990 FR 9005835
(43) Date de publication de la demande: 06.11.1991
(73) Titulaire: BOURBON AUTOMOBILE, F-39170 Saint Lupicin (FR); Orssaud, André, 39290 Moissey (FR)
(72) Inventeur: Orssaud, André, F-39290 Moissey (FR); Scherrer, Bernard, F-39170 Saint Lupicin (FR)
(74) Mandataire: Maureau, Philippe

(56) Documents cités:
- WO-A-84/04498
- DE-A- 3 533 464
- US-A- 2 807 992
- US-A- 3 672 293

## Description

La présente invention a pour objet un diffuseur d'air équipé d'un dispositif de réglage de l'orientation du flux d'air, destiné plus spécialement à l'équipement d'un véhicule, notamment d'un véhicule automobile.

Afin d'assurer la circulation d'air à l'intérieur d'un véhicule, et d'améliorer le confort des passagers, notamment en période estivale, il est connu d'équiper la planche de bord de plusieurs diffuseurs d'air. Chaque diffuseur comprend, outre une vanne permettant le réglage du débit d'air, un dispositif permettant l'orientation du flux d'air. Généralement le dispositif permettant le réglage de l'orientation du flux d'air comprend des lames verticales, parallèles les unes aux autres, montées pivotantes sur un support, et accouplées en pivotement les unes aux autres. Cet agencement permet de réaliser un réglage de la direction du flux d'air dans un sens transversal. Pour réaliser un réglage vertical, il est connu soit de disposer d'une seconde série de lames parallèles, et orientées autour d'axes horizontaux, soit de monter les lames verticales à l'intérieur d'une pièce cylindrique, ouverte pour permettre le passage du flux d'air, et montée pivotante autour d'un axe horizontal.

Dans tous les cas, la réalisation d'un diffuseur d'air nécessite la réalisation puis l'assemblage d'un nombre très important de pièces, ce qui conduit à des prix de revient élevés. En outre, d'un point de vue de l'esthétique, celle-ci n'est absolument pas variée puisqu'elle dépend toujours des lames verticales assurant l'orientation du flux d'air.

Le document DE-A-3533464 concerne un aérateur comportant une pluralité de plaques superposées, comportant chacune une pluralité d'ouvertures, l'alignement des différentes ouvertures formant autant de canaux pour le passage de l'air. Par glissement des plaques les unes sur les autres, il est possible de modifier l'alignement des ouvertures et par suite l'orientation des canaux pour le passage de l'air. Toutefois, le grand nombre de plaques superposées et leur mode d'accouplement ne permet qu'une très faible latitude de réglage de l'orientation des canaux.

La présente invention vise à remédier à ces inconvénients en fournissant un diffuseur d'air à plaques coulissantes, de structure très simple et compacte, réalisé à partir d'un nombre minime de pièces, permettant une orientation multidirectionnelle du flux d'air, et susceptible de se présenter sous des formes esthétiques très différentes les unes des autres.

A cet effet, le diffuseur d'air qu'elle concerne, du type constitué par un boîtier comportant un fond et un couvercle, ménagés éventuellement dans le conduit d'amenée d'air, ou fixés à la sortie de celui-ci, comportant chacun une ouverture centrale, et dans lequel est montée une plaque centrale fixe, comportant des ouvertures régulièrement réparties, de chaque côté de laquelle sont montées, en contact glissant avec elle, au moins deux plaques, comportant également des ouvertures, le nombre de plaques de part et d'autre de la plaque centrale fixe étant pair, les dimensions des plaques latérales étant inférieures à celles de la plaque centrale afin de permettre un déplacement au contact de celles-ci selon au moins deux directions croisées, les plaques étant accouplées les unes aux autres de telle sorte qu'un mouvement imprimé à une plaque latérale, par rapport à la plaque fixe, se traduise par un mouvement symétrique de la plaque correspondante située de l'autre côté de la plaque centrale, est caractérisé en ce que les moyens d'accouplement des plaques disposées de part et d'autre de la plaque centrale sont constitués par au moins deux doigts, perpendiculaires aux plaques, et traversant des trous en correspondance ménagés dans la plaque centrale et dans les plaques disposées de part et d'autre de celle-ci, avec possibilité d'inclinaison de chaque doigt par rapport à l'orifice ménagé dans la plaque centrale.

Avantageusement la plaque centrale et les plaques latérales disposées de part et d'autre de celle-ci comportent le même nombre d'ouvertures ménagées selon la même répartition.

Il est ainsi possible en faisant varier la position relative des différentes plaques de modifier l'orientation de chaque couloir constitué par l'alignement des ouvertures correspondantes ménagées dans les différentes plaques.

La structure de ce diffuseur d'air est très simple, puisque celui-ci comprend par exemple trois plaques, à savoir une plaque centrale fixe et deux plaques latérales disposées de part et d'autre de la plaque centrale, montées glissantes sur celle-ci par l'intermédiaire des moyens d'accouplement. Le montage de ce diffuseur peut ainsi être facilement automatisé puisqu'il s'agit de réaliser simplement l'empilage de plusieurs éléments. Il est avantageux de noter que la forme des ouvertures peut être variable, celles-ci pouvant posséder une forme rectangulaire, carrée, circulaire, ou encore une autre forme polygonale. Cette caractéristique est intéressante d'un point de vue esthétique, car permettant d'adopter différents types de présentation. En outre, il doit être noté que les plaques n'ont pas nécessairement une forme rectangulaire, mais peuvent posséder des formes circulaires, ou oblongues, afin de s'intégrer le mieux possible à l'esthétique du tableau de bord ou du panneau dans lequel est monté le diffuseur.

D'autres caractéristiques de l'invention ressortent du jeu de revendications ci-annexé.

De toute façon, l'invention sera bien comprise à l'aide de la description qui suit, en référence au dessin schématique annexé, représentant à titre d'exemple non limitatif deux formes d'exécution de ce diffuseur, dans le cas où le boîtier de celui-ci est autonome :

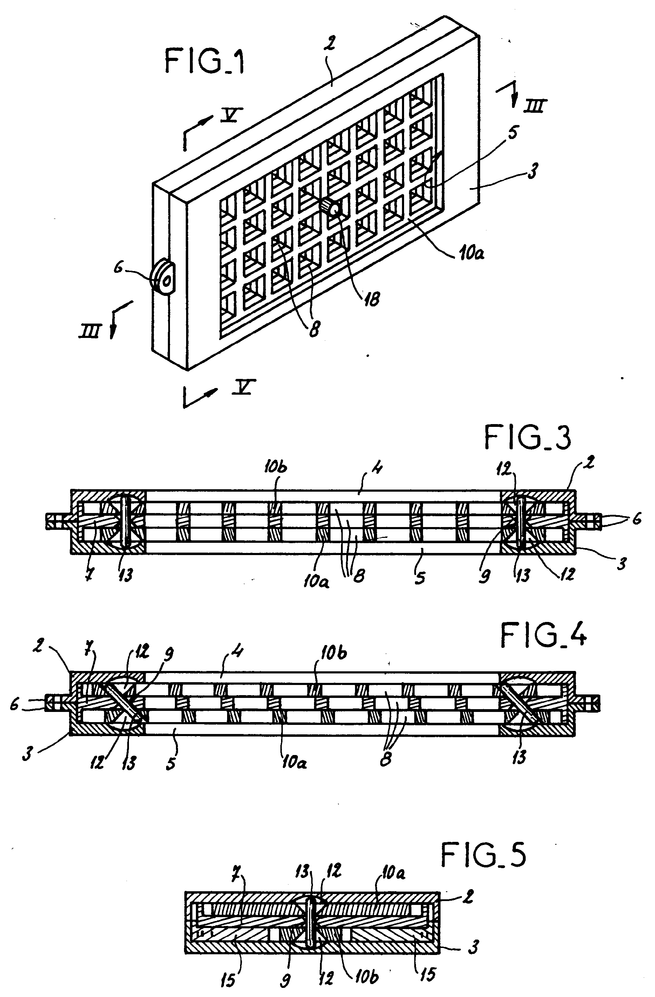

Figure 1 est une vue en perspective de ce diffuseur en position montée ;
Figure 2 en est une vue en perspective éclatée ;
Figures 3 et 4 en sont deux vues en coupe longitudinale dans deux positions de guidage du flux d'air, selon la ligne III-III de figure 1 ;
Figure 5 en est une vue en coupe transversale selon la ligne V-V de figure 1 ;
Figure 6 est une vue de face du boîtier après retrait de son fond, montrant plus spécialement les moyens de guidage de l'une des plaques latérales ;
Figure 7 est une vue en coupe longitudinale, et à échelle agrandie, d'une seconde forme d'exécution du boîtier, dans deux positions différentes.

Le diffuseur représenté au dessin comprend un fond 2 et un couvercle 3 présentant l'un et l'autre de larges ouvertures respectivement 4 et 5, et assemblable l'un à l'autre au niveau d'oreilles latérales 6 qu'ils comportent. A l'intérieur de ce boîtier est destinée à être montée une plaque centrale fixe 7, comportant une pluralité de petites ouvertures 8 de forme carrée régulièrement réparties. Dans ses deux bordures latérales, la plaque centrale 7 présente deux trous 9 à entrée conique sur ses deux faces, délimitant une ouverture en forme de diabolo. De part et d'autre de la plaque centrale 7 sont disposées deux plaques latérales 10a et 10b, de dimensions légèrement inférieures à celles de la plaque centrale 7, et comportant des ouvertures 8 en même nombre et en même répartition que les ouvertures 8 de la plaque centrale 7. Les deux plaques 10a et 10b présentant chacune, dans leurs bordures latérales deux trous 12 à entrée conique du côté de leur face tournée vers l'extérieur. Les trous 9, 12 des plaques 8, 10 servent à l'engagement de deux doigts 13.

Comme montré au dessin, les doigts 13 réalisent l'accouplement entre les deux plaques mobiles 10a et 10b, en autorisant un mouvement relatif de celles-ci vis à vis de la plaque centrale 7, le déplacement d'une plaque 10a ou 10b dans une direction se traduisant par le déplacement dans la direction inverse de la plaque respectivement 10b ou 10a.

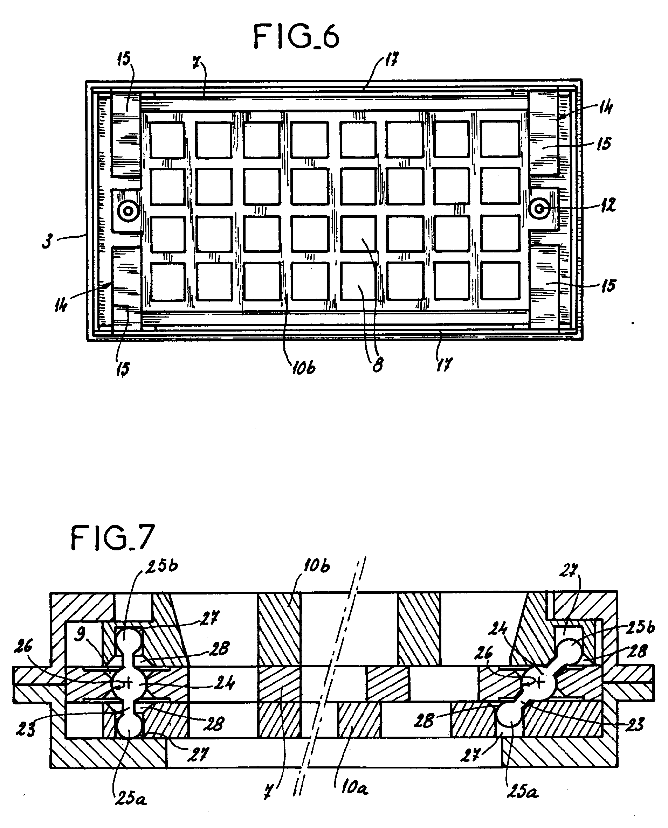

La figure 3 représente une première position du diffuseur dans lequel les trous 8 des différentes plaques sont en alignement.

La figure 4 représente une position dans laquelle les plaques ont été décalées de telle sorte que les trous forment des couloirs inclinés, assurant une orientation latérale de l'air par rapport au cas précédent.

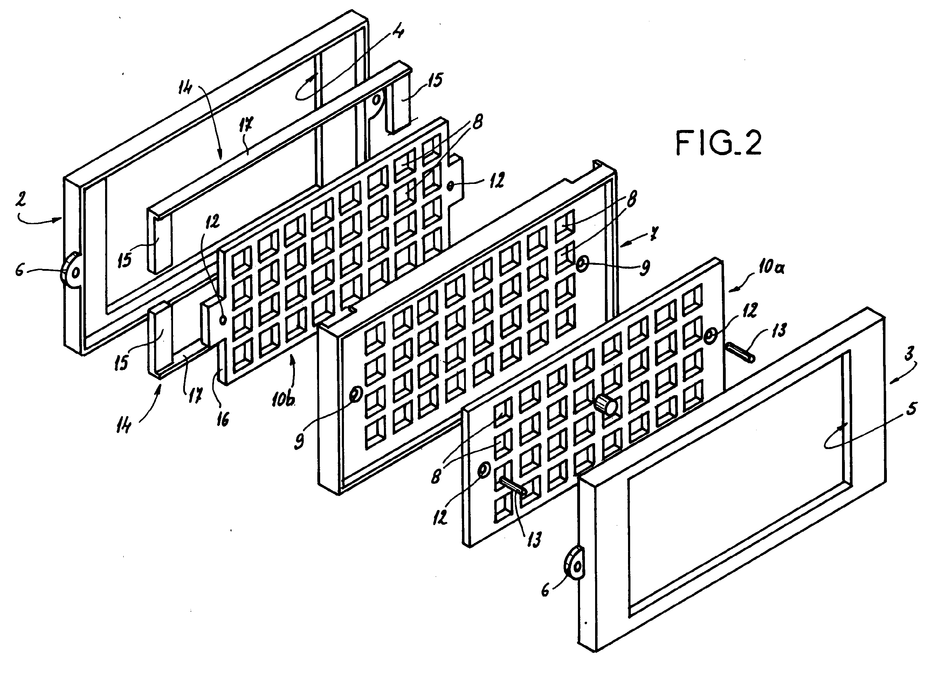

Afin d'assurer le guidage de la plaque 10b dans deux directions croisées, celle-ci est associée à deux pièces 14 représentées plus spécialement aux figures 2 et 6. Chaque pièce 14 comporte deux barrettes 15 destinée à venir prendre appui sur les deux côtés 16 de la plaque 10b correspondant à la largeur de celle-ci. Ces deux barrettes 15 ont une longueur inférieure à la moitié de la largeur de la plaque 10b, de façon à permettre le coulissement de celle-ci dans le sens de cette largeur.

Comme montré aux figures 2 et 6, deux barrettes 15 d'une pièce 14 sont reliées l'une à l'autre par un longeron 17, disposé à l'extérieur de la plaque centrale 7. Ce longeron 17 ne gêne donc pas les mouvements de la plaque 10b dans le sens de la largeur. Toutefois ces longerons ayant une longueur inférieure à celle de la plaque centrale 7, lors d'un mouvement de la plaque 10b dans le sens de la longueur, celle-ci entraîne dans son mouvement les deux pièces 14, dont les longerons 17 coulissent le long des bords longitudinaux de la plaque centrale 7. Cet agencement évite une mise en travers des plaques latérales mobiles nuisant à l'esthétique du diffuseur.

La figure 7 représente une variante d'exécution de ce diffuseur d'air, dans laquelle les mêmes éléments sont désignés par les mêmes références que précédemment. Dans ce cas, chaque doigt d'accouplement 23 entre les trois plaques 7, 10a, 10b comporte trois excroissances sphériques 24, 25a et 25b respectivement, formant des rotules d'articulation. A cet effet, est ménagée une portée centrale 26 pour la sphère 24, tandis que chaque plaque 10a, 10b comporte un évidement tronconique 28 débouchant dans la face intérieure de la plaque prolongé par un évidement cylindrique 27 de diamètre correspondant à celui d'une sphère 25a, 25b. Cette disposition permet une manoeuvre douce et une grande latitude de coulissement des plaques et par suite d'orientation du flux d'air, compte tenu des possibilités d'inclinaison des doigts 23, grâce aux évidements coniques 9 de la plaque centrale 7 et 28 des plaques latérales 10a, 10b, ces évidements coniques possèdant le même angle.

Le serrage de l'empilement lors du montage des différents éléments les uns sur les autres, permet d'assurer une tension suffisante pour éviter que lorsque les plaques donnent une direction déterminée au flux d'air, elles perdent leur position relative par exemple sous l'effet des vibrations du véhicule, ou sous l'effet de la force du flux d'air.

Comme montré au dessin, le réglage de la position des plaques mobiles est obtenu en agissant sur la seule plaque 10a tournée vers l'avant, dont la face avant comporte un organe de manoeuvre 18 constitué, dans le cas présent par un téton mais qui pourrait tout aussi bien être constitué par une empreinte en creux.

Comme il ressort de ce qui précède, l'invention apporte une grande amélioration à la technique existante, en fournissant un diffuseur d'air de structure très simple, réalisé à partir d'un nombre réduit de pièces, qui sont faciles à assembler les unes aux autres, et qui du fait de cette simplicité, possèdent une grande fiabilité de fonctionnement.

Le nombre de plaques pourrait être différent, par exemple de cinq, deux plaques mobiles étant disposées de chaque côté de la plaque fixe, que la forme des ouvertures ménagées dans ces plaques pourrait être différente, ou encore que les moyens d'accouplement entre les plaques pourraient ne pas être constitués par des doigts, sans que l'on sorte pour autant du cadre de l'invention.

## Revendications

1. Diffuseur d'air, du type constitué par un boîtier comportant un fond (2) et un couvercle (3), ménagés éventuellement dans le conduit d'amenée d'air, ou fixés à la sortie de celui-ci, comportant chacun une ouverture centrale, et dans lequel est montée une plaque centrale fixe (7), comportant des ouvertures (8) régulièrement réparties, de chaque côté de laquelle sont montées, en contact glissant avec elle, au moins deux plaques (10a,10b), comportant également des ouvertures (8), le nombre de plaques de part et d'autre de la plaque centrale fixe étant pair, les dimensions des plaques latérales (10a, 10b) étant inférieures à celles de la plaque centrale (7) afin de permettre un déplacement au contact de celles-ci selon au moins deux directions croisées, les plaques étant accouplées les unes aux autres de telle sorte qu'un mouvement imprimé à une plaque latérale (10a,10b), par rapport à la plaque fixe (7), se traduise par un mouvement symétrique de la plaque correspondante située de l'autre côté de la plaque centrale, caractérisé en ce que les moyens d'accouplement des plaques (10a,10b) disposées de part et d'autre de la plaque centrale sont constitués par au moins deux doigts (13), perpendiculaires aux plaques, et traversant des trous en correspondance ménagés dans la plaque centrale (7) et dans les plaques (10a,10b) disposées de part et d'autre de celle-ci, avec possibilité d'inclinaison de chaque doigt par rapport à l'orifice (9) ménagé dans la plaque centrale.

2. Diffuseur d'air selon la revendication 1, caractérisé en ce que chaque trou (9) ménagé dans la plaque centrale (7) et servant au passage d'un doigt (13) d'accouplement possède une forme générale de diabolo, c'est-à-dire comporte deux entrées coniques dont les sommets se rejoignent au milieu de la plaque, considéré dans le sens de son épaisseur.

3. Diffuseur d'air selon la revendication 2, caractérisé en ce que chaque trou (12) ménagé dans une plaque latérale (10a,10b) et servant au passage d'un doigt (13) présente une entrée conique ménagée sur sa face tournée vers l'extérieur.

4. Diffuseur d'air selon la revendication 2, caractérisé en ce qu'il comporte trois plaques superposées (7, 10a, 10b) dont celle centrale (7) est fixe, accouplées par des doigts (23) comportant chacun trois excroissances sphériques (24, 25a, 25b) formant des rotules d'articulation dans les trois plaques, chaque plaque latérale (10a, 10b) comportant, débouchant dans sa face intérieure et pour chaque doigt, un évidement tronconique (28) dont la grande section est située du côté de cette face, se prolongeant par un évidement cylindrique (27) de diamètre correspondant à celui d'une excroissance sphérique du doigt d'accouplement.

5. Diffuseur d'air selon l'une quelconque des revendications 1 à 4, caractérisé en ce que dans la mesure où les différentes plaques (7,10a,10b) que comporte celui-ci, possèdent une forme générale rectangulaire, l'une au moins (10b) des plaques latérales est associée à des moyens permettant son guidage dans deux directions seulement, orientée d'une part dans le sens de la longueur, et d'autre part, dans le sens de la largeur.

6. Diffuseur d'air selon la revendication 5, caractérisé en ce que les moyens assurant le guidage de l'une (10b) des plaques latérales sont constitués par deux séries de barrettes (15) d'écartement correspondant à la longueur de la plaque, contre lesquelles cette plaque latérale est en appui, avec possibilité de coulissement le long des barrettes pour réaliser un déplacement dans un premier sens, et avec possibilité de coulissement dans l'autre sens en entraînant les barrettes (15).

7. Diffuseur d'air selon l'une quelconque des revendications 1 à 6, caractérisé en ce que les ouvertures (8), ménagées dans les plaques, possèdent une forme variée telle que rectangulaire, polygonale, circulaire... .

## Patentansprüche

1. Luftverteiler, welcher aus einem Gehäuse mit einem Boden (2) und einem Deckel (3) gebildet ist, die gegebenenfalls in der Luftzuführungsleitung angeordnet oder an deren Ausgang befestigt sind und jeweils eine zentrale Öffnung haben, und in welchem eine feste, regelmäßig verteilte Öffnungen (8) aufweisende Mittelplatte (7) angeordnet ist, wobei, auf jede Seite derselben verteilt, wenigstens zwei an dieser gleitend anliegende Platten (10a, 10b) angeordnet sind, die ebenfalls Öffnungen (8) aufweisen, wobei die Anzahl der Platten zu beiden Seiten der festen Mittelplatte eine gerade Zahl ist, wobei ferner die Abmessungen der Seitenplatten (10a, 10b) kleiner als die der Mittelplatte (7) ist, um eine Verschiebung in Anlage an diesen in wenigstens zwei sich kreuzenden Richtungen zu ermöglichen, wobei die Platten miteinander so gekoppelt sind, daß eine auf eine Seitenplatte (10a, 10b) übertragene Bewegung gegenüber der festen Platte (7) in eine dazu symmetrische Bewegung der entsprechenden, auf der anderen Seite der Mittelplatte angeordneten Platte umgewandelt wird, dadurch **gekennzeichnet,** daß die Mittel zum Kuppeln der zu beiden Seiten der Mittelplatte angeordneten Platten (10a, 10b) durch wenigstens zwei Finger (13) gebildet sind, die senkrecht zu den Platten stehen und die zueinander ausgerichtete, in der Mittelplatte (7) und in den zu beiden Seiten derselben angeordneten Platten ausgebildete Löcher durchsetzen, mit der Möglichkeit einer Neigung jedes Fingers bezüglich der in der Mittelplatte ausgebildeten Öffnung (9).

2. Luftverteiler nach Anspruch 1, dadurch **gekennzeichnet,** daß jedes in der Mittelplatte (7) ausgebildete und für den Durchtritt eines Kupplungsfingers (13) dienende Loch (9) allgemein die Form eines Diabolo hat, d.h. zwei konische Eintrittsöffnungen aufweist, deren Spitzen sich in der Mitte der Platte, in Dickenrichtung gesehen, treffen.

3. Luftverteiler nach Anspruch 2, dadurch **gekennzeichnet,** daß jedes in einer Seitenplatte (10a, 10b) ausgebildte und für den Durchtritt eines Fingers (13) dienende Loch (12) eine konische, an der nach außen gerichteten Seite ausgebildete Eingangsöffnung hat.

4. Luftverteiler nach Anspruch 2, dadurch **gekennzeichnet,** daß er drei aufeinandergeschichtete Platten (7, 10a, 10b) aufweist, deren mittlere (7) fest angeordnet ist und die durch Finger (23) gekoppelt sind, welche jeweils drei kugelförmige Ausbuchtungen (24, 25a, 25b) haben, die Kugelgelenkköpfe in den drei Platten bilden, wobei jede Seitenplatte (10a, 10b) für jeden Finger eine in ihre Innenfläche mündende kegelstumpfförmige Ausnehmung (28) hat, deren großer Querschnitt an der zu dieser Fläche gewandten Seite liegt und die in eine zylindrische Ausnehmung (27) mit einem Durchmesser entsprechend dem einer kugelförmigen Ausbuchtung des Kupplungsfingers übergeht.

5. Luftverteiler nach einem der Ansprüche 1 bis 4, dadurch **gekennzeichnet,** daß für den Fall, daß die verschiedenen Platten (7, 10a, 10b), die dieser aufweist, eine allgemein rechteckige Form haben, wenigstens eine (10b) der Seitenplatten Mitteln zugeordnet ist, die deren Führung ausschließlich in zwei Richtungen ermöglichen, die einerseits in Längsrichtung, andererseits in Breitenrichtung orientiert sind.

6. Luftverteiler nach Anspruch 5, dadurch **gekennzeichnet,** daß die Mittel zum Führen der einen (10b) der Seitenplatten durch zwei Sätze von Stegen (15) mit einem der Länge der Platte entsprechenden Abstand gebildet sind, an denen diese Seitenplatte anliegt mit der Möglichkeit einer Verschiebebewegung entlang der Stege, um eine Verstellung in einer ersten Richtung durchzuführen, und mit der Möglichkeit einer Verschiebebewegung in der anderen Richtung unter Mitnahme der Stege (15).

7. Luftverteiler nach einem der Ansprüche 1 bis 6, dadurch **gekennzeichnet,** daß die in den Platten ausgebildeten Öffnungen (8) von unterschiedlicher Form sind, nämlich rechteckig, polygonal, kreisförmig ... .

## Claims

1. Air diffuser of the type comprising a housing having a base (2) and a lid (3), provided if necessary in the air supply conduit, or fixed to the outlet of the latter, each comprising a central opening, and in which there is mounted a fixed central plate (7) comprising uniformly distributed openings (8), on each side of which there are mounted, in sliding contact therewith, at least two plates (10a, 10b) likewise comprising openings (8), the number of plates on either side of the fixed central plate being even, the dimensions of the lateral plates (10a, 10b) being less than those of the central plate (7) in order to permit displacement upon contact of the latter in at least two crosswise directions, the plates being coupled to one another in such a way that a movement imposed on a lateral plate (10a, 10b) relative to the fixed plate (7) is translated into a symmetrical movement of the corresponding plate situated on the other side of the central plate, characterised in that the coupling means for the plates (10a, 10b) disposed on either side of the central plate are constituted by at least two pins (13) perpendicular to the plates, and passing through corresponding holes provided in the central plate (7) and in the plates (10a, 10b) disposed on either side of the latter, with the facility of inclining each pin relative to the opening (9) provided in the central plate.

2. Air diffuser according to claim 1, characterised in that each hole (9) provided in the central plate (7), and serving to receive a coupling pin (13), has the general shape of a dolly, i.e. it comprises two conical inlets whose apices intersect at the centre of the plate, seen in the direction of its thickness.

3. Air diffuser according to claim 2, characterised in that each hole (12) provided in a lateral plate (10a, 10b) and serving to receive a pin (13) has a conical inlet provided on its face which is turned toward the exterior.

4. Air diffuser according to claim 2, characterised in that it comprises three superimposed plates (7, 10a, 10b), of which the central one (7) is fixed, coupled by pins (23) each of which comprises three spherical protuberances (24, 25a, 25b) forming articular joints in the three plates, each lateral plate (10a, 10b) comprising, opening into its internal face and for each pin, a truncated-conical recess (28) whose large cross-section is located at the same side as the said face, and being extended by a cylindrical recess (27) of a diameter corresponding to that of a spherical protuberance of the coupling pin.

5. Air diffuser according to any one of claims 1 to 4, characterised in that, insofar as the different plates (7, 10a, 10b) included therein have a generally rectangular shape, one at least (10b) of the lateral plates is associated with means enabling it to be guided in two directions only, oriented on the one hand in the direction of the length, and on the other hand in the direction of its width.

6. Air diffuser according to claim 5, characterised in that the means ensuring guidance of one (10b) of the lateral plates are constituted by two series of bars (15) at a spacing corresponding to the length of the plate, and against which this lateral plate is supported, with the facility of sliding along the bars in order to provide a displacement in a first direction, and with the facility of sliding in the other direction, moving the bars (15) simultaneously.

7. Air diffuser according to any one of claims 1 to 6, characterised in that the openings (8) provided in the plates have various shapes, such as rectangular, polygonal, circular, etc.
